# EUROPEAN PATENT APPLICATION

(11) **EP 1 715 432 A1**
(43) Date of publication of application: **25.10.2006**
(21) Application number: 05103093.0
(22) Date of filing: 18.04.2005
(51) Int. Cl.: G06F 17/30

(54) **System and Method for Exposing Synchronous Web Services as Notification Style Web Services**

(71) Applicant: Research In Motion Limited, Waterloo, Ontario N2L 3W8 (CA)
(72) Inventor: Bateman, Cameron, M4Y 1R2, Toronto (CA); Wetherly, Curtis, L6H 5G4, Oakville (CA)
(74) Representative: Rickard, David John

(57) **Abstract**

A system and method for asynchronous processing of network communications between a client device and a respective synchronous web service. The system and method comprises: an input for receiving a subscription request; a subscription module configured for processing the received subscription request to identify subscription request data in the subscription request for sending in a synchronous request message to the synchronous web service, to identify a notification filter expression in the subscription request for determining whether a synchronous response message received from the synchronous web service in response to the synchronous request message satisfies the subscription request data, and to identify a polling protocol in the subscription request for defining communication parameters of the respective synchronous request and response messages; and an output for sending the polling protocol and the subscription request data to be used in polling the synchronous web service.

## Description

This application relates generally to wireless communication and specifically to network messaging for communication devices.

There is a continually increasing number of mobile communication devices in use today, such as mobile telephones, PDAs with wireless communication capabilities, and two-way pagers. Software applications which run on these mobile communication devices increase their utility. For example, a mobile phone may include an application which retrieves the weather for a range of cities, or a PDA may include an application that allows a user to shop for groceries. These software applications take advantage of the mobility of these devices and connectivity to a wireless network in order to provide timely and useful services to users, regardless of where the users are. However, due to the restricted resources of mobile communications devices, and the complexity of delivering data wirelessly to a mobile communication device, developing software applications for mobile communications devices remains a difficult and time-consuming task.

Web Services are emerging as the de-facto mechanism to allow disjoint parties to collaborate on the Internet. Web services allow businesses and other parties to collaborate in a universal, platform and language neutral way and promise to overcome traditional barriers encountered in linking numerous and diverse information systems. Web services are still in their relative infancy, with many technology players cooperating to define the emerging standards, and corporations beginning to throw their weight behind the thrust to link disparate systems over the web using this standard approach. A common model employed in web service offerings is the traditional synchronous request-response type interaction whereby the consumer of the service passes some information and receives something in response. In this scenario the user of the device requests or "pulls" the content from the network. In other words, the content is constantly present in the network, but the user needs to issue a retrieval request to access the information (e.g. using a browser on the mobile device).

In real-life applications there is a lot of information that is available to a user but hardly accessible, as the user doesn't know when the information is posted or when there is a change in the status of the posted content. Such information ideally needs to be "pushed" to the user either periodically or when certain predefined events occur. Some examples of possible push situations are unrequested arrival of new e-mail, stock market information, multi-user game updates, etc. This ability to push information spontaneously implies an asynchronous messaging framework.

From a practical point of view, wireless communications have higher cost than wired communications and usually are characterized by higher latency times, making a 'pull' from a wireless device inherently expensive. Slow connection times sometimes might be critical to the user's experience. Push technology can be wireless friendly. Its users can benefit in a number of ways: push technology can make useful data instantly available, can improve user perception of the wireless network; can make data delivery cost effective (since the device does not have to repeatedly poll for data); and can extend battery life.

Wireless push would involve a server that, given a user's specific one-time request to be notified with specific data on predefined conditions, would send this data to the user's device as soon as the data is available and/or the conditions have been met. The communication protocol and user/device addressing are device-specific and the server must be aware of them. Web Services have become a ubiquitous standard for access to content resources as well as communicating to back-end servers. Their number and complexity have increased considerably in recent years. However, invoking Web Service operations from a wireless device using the synchronous communication method exclusively can be expensive and impractical.

Systems and methods disclosed herein provide a notification environment to obviate or mitigate at least some of the above presented disadvantages.

Wireless push would involve a server that, given a user's specific one-time request to be notified with specific data on predefined conditions, would send this data to the user's device as soon as the data is available and/or the conditions have been met. The communication protocol and user/device addressing are device-specific and the server must be aware of them. Web Services have become a ubiquitous standard for access to content resources as well as communicating to back-end servers. Their number and complexity have increased considerably in recent years. However, invoking Web Service operations from a wireless device using the synchronous communication method exclusively can be expensive and impractical. Contrary to current systems and methods there is provided a system and method for asynchronous processing of network communications between a client device and a respective synchronous web service. The system and method comprises: an input for receiving a subscription request; a subscription module configured for processing the received subscription request to identify subscription request data in the subscription request for sending in a synchronous request message to the synchronous web service, to identify a notification filter expression in the subscription request for determining whether a synchronous response message received from the synchronous web service in response to the synchronous request message satisfies the subscription request data, and to identify a polling protocol in the subscription request for defining communication parameters of the respective synchronous request and response messages; and an output for sending the polling protocol and the subscription request data to be used in polling the synchronous web service.

In one embodiment there is provided a system for asynchronous processing of network communications between a client device and a respective synchronous web service, the system comprising: an input for receiving a subscription request; a subscription module configured for processing the received subscription request to identify subscription request data in the subscription request for sending in a synchronous request message to the synchronous web service, to identify a notification filter expression in the subscription request for determining whether a synchronous response message received from the synchronous web service in response to the synchronous request message satisfies the subscription request data, and to identify a polling protocol in the subscription request for defining communication parameters of the respective synchronous request and response messages; and an output for sending the polling protocol and the subscription request data to be used in polling the synchronous web service.

There is further provided in another embodiment a method for asynchronous processing of network communications between a client device and a respective synchronous web service, the method comprising the steps of: receiving a subscription request; identifying subscription request data in the subscription request, the subscription request data for sending in a synchronous request message to the synchronous web service; identifying a notification filter expression in the subscription request, the notification filter expression for determining whether a synchronous response message received from the synchronous web service in response to the synchronous request message satisfies the subscription request data; identifying a polling protocol in the subscription request, the polling protocol for defining communication parameters of the respective synchronous request and response messages; wherein the polling protocol and the subscription request data are to be used in polling the synchronous web service.

There is further provided a computer program product for asynchronous processing of network communications between a client device and a respective synchronous web service, the computer program product comprising: a computer readable medium; a subscription module stored on the computer readable medium for receiving a subscription request and configured for processing the received subscription request to identify subscription request data in the subscription request for sending in a synchronous request message to the synchronous web service, to identify a notification filter expression in the subscription request for determining whether a synchronous response message received from the synchronous web service in response to the synchronous request message satisfies the subscription request data, and to identify a polling protocol in the subscription request for defining communication parameters of the respective synchronous request and response messages; wherein the polling protocol and the subscription request data are to be used in polling the synchronous web service.

### BRIEF DESCRIPTION OF THE DRAWINGS

These and other features will become more apparent of embodiments of the present invention in the following detailed description, in which reference is made to the appended drawings by way of example wherein:

Figure 1 is a block diagram of a communication system;

Figure 2 is a block diagram of a mobile communication device of Figure 1;

Figure 3 shows a notification framework correlating asynchronous to synchronous messaging for the web service of Figure 1;

Figure 4 shows further architecture of the framework of Figure 3;

Figure 5 is an example embodiment of the framework of Figure 4; and

Figure 6 is a block diagram of an example application program of Figure 2.

Figure 7 shows an example operation of the framework of Figure 3.

### DESCRIPTION

### Network System

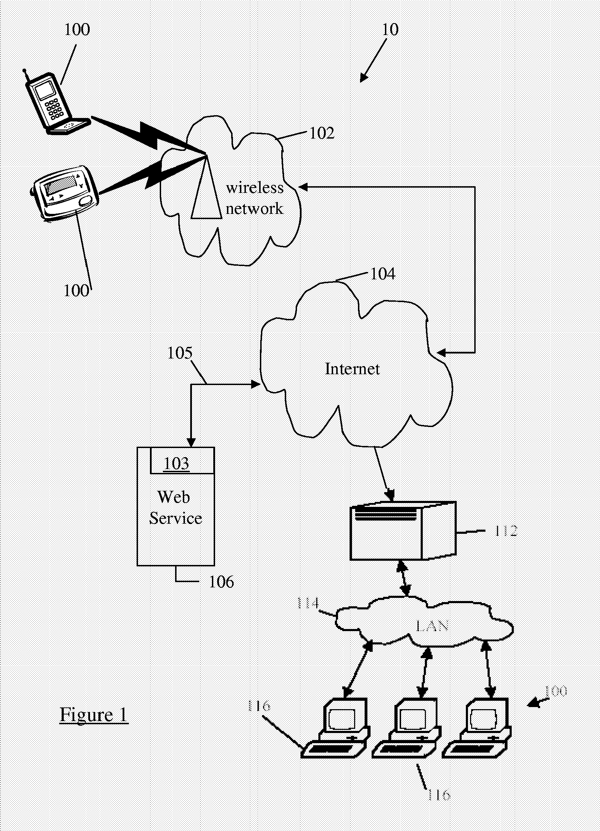

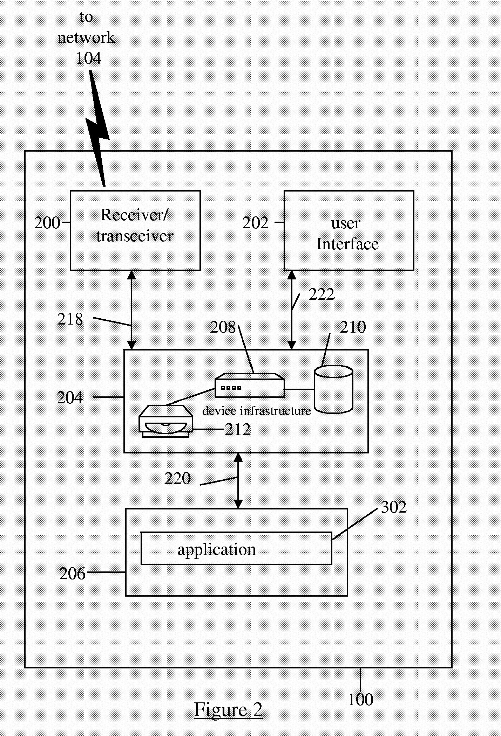

Referring to Figure 1, a network system 10 includes mobile communication devices 100 for interacting with one or more web services 106 (i.e. data source) provided via a coupled wireless network 102 and a communications network 104 (e.g. the Internet). The devices 100 transmit and receive requests/response messages 105, respectively, when in communication with the web services 106. Further, the system 10 can also have a gateway server 112 for connecting the desktop terminals 116 via a Local Area Network (LAN) 114 to the web service 106. The devices 100 and personal computers 116 are hereafter referred to as the devices 100 for the sake of simplicity. These devices 100 can be such as but not limited to the personal computers 116, generic wireless devices, PDAs, self-service kiosks and the like. The devices 100 can operate as web clients of the web services 106 by using the requests/response messages 105 in the form of message header information and associated data content, for example requesting and receiving product pricing and availability from an on-line merchant. The web service 106 is an example of a system with which client application programs 302 (see Figure 2) on the communication devices 100 interact via the networks 102,114 and the Internet 104 in order to provide utility to users of the devices 100. The messages 105 sent between the devices 100 and the web service 106 could traverse a message-map service (not shown) which converts the messages 105 between the differing formats used by the devices 100 and the web service 106. It is recognized that other devices and computers (not shown) could be connected to the web service 106 via the network 10 and associated networks other than as shown in Figure 1. Web services 106 are selected for the following description of the system 10, for the sake of simplicity. However, it is recognized that other generic schema defined services could be substituted for the web services 106, if desired. Further, the networks 102, 104, 114 of the system 10 will hereafter be referred to as the network 104, for the sake of simplicity.

For satisfying the appropriate requests/response messages 105, the web service 106 could communicate with the devices 100 through various protocols (such as but not limited to HTTP and component API) for exposing relevant business logic (methods) to client application programs 302 (see Figure 2) once provisioned on the devices 100. The application programs 302 of the devices 100 can use the business logic of the web service 106 similarly to calling a method on an object (or a function). It is recognized that the client application programs 302 can be downloaded/uploaded in relation to the web service 106, through the messages 105 via the network 104 directly to the devices 100. It is further recognized that the devices 100 can communicate with one or more web services 106 via the network 104.

Referring again to Figure 1, the web service 106 provides information messages 105 which are used by the client application programs 302 on the communication devices 100. Alternatively, or in addition, the web service 106 may receive and use the information messages 105 provided by the client application programs 302 executed on the communication devices 100, or perform tasks on behalf of client application programs 302 executed on the communication devices 100. The web service 106 can be defined as a software service, which can implement an interface expressed using Web Services Description Language (WSDL) registered in Universal Discovery Description and Integration (UDDI), for example, and can communicate through messages 105 with client devices 100 by being exposed over the Internet 104 through an appropriate protocol such as the Simple Object Access Protocol (SOAP), for example. In some implementations, SOAP is a specification that defines the XML format for the messages 105, including a well-formed XML fragment enclosed in SOAP elements. Other parts of SOAP specify how to represent program data as XML and how to use SOAP to do Remote Procedure Calls (RPC). These optional parts of SOAP are used to implement RPC-style applications where a SOAP request message 105 containing a callable function, and the parameters to pass to the function, is sent from the client device 100, and the service 106 returns the response message 105 with the results of the executed function. SOAP also supports document style applications where the SOAP message 105 is a wrapper around an XML document. A further optional part of SOAP defines the HTTP binding (e.g. header), whereas some SOAP implementations support MSMQ, MQ Series, SMTP, or TCP/IP transport protocols. Alternatively, the web service 106 may use other known communication protocols, message 105 formats, and the interface may be expressed in other web services 106 languages than described above. Accordingly, the services supplied by the web service 106 are utilized by the user of the devices 100 over the network 104.

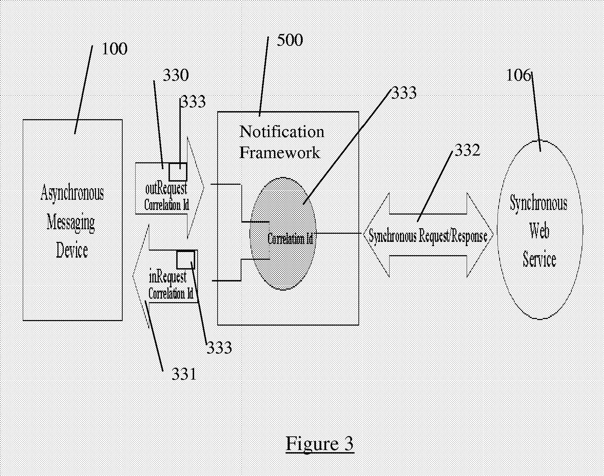

The generic services provided by the data source 106 (i.e. web service) can be Web Services and/or other generic services such as but not limited to SQL Databases, IDL-based CORBA and RMI/IIOP systems, Legacy Databases, J2EE, SAP RFCs, and COM/DCOM components. The web service 106 is described by a service description 103, representing a source schema definition of the web Service 106, and is coupled to the device 100 by a notification framework 500 (see Figure 3).

### Example Web Service 106

Web services 106 can be described, for example, using WSDL (Web Services Description Language) and therefore presented to the network as a service commonly referred to a web service. For example, WSDL is written in XML as an XML document used to describe the Web services 106 and where to locate Web services 106, i.e. the XML document can specify the location of the web service 106 and the operations (or methods) the service 106 exposes to the network 104 (e.g. Internet). The WSDL document defines the web service 106 using major elements, such as but not limited to: <portType> being the operations performed by the web service 106 (each operation can be compared to a function in a traditional programming language such that the function is resident on the web service 106 itself); <message> being the message formats used by the web service106; <types> being the data types used by the web service 106 and being typically part of the messages themselves; and <binding> being the communication protocols used by the web service 106 for communicating the messages between the web service 106 and the device 100. Further, a service element could be included in the WSDL document to identify the location (e.g. URL) of the web service 106 itself and to manage the logical network connection between the notification framework 500 (for example) and the web service 106 according to the communication protocols provided by the binding element.

Knowledge of the WSDL document can for example be used by the notification framework 500 for brokering the messaging between the web service 106 and the device(s) 100. The WSDL document can also contain other elements, like extension elements and a service element that makes it possible to group together the definitions of several web services 106 in one single WSDL document. The <portType> element defines the web service106, the operations that can be performed by the web service106, and the messages that are involved with respect to the web service 106 operations. A WSDL port describes the interfaces (legal operations) exposed by the web service 106. The <portType> element can be compared to a function library (or a module, or a class) in a traditional programming language. The <message> element defines the data elements of the operation as well as the name associated with each of the messages for interaction with the operation. Each message can consist of one or more parts. The parts can be compared to the parameters of a function call in a traditional programming language, such that the function is part of the web service 106 itself. The <types> element defines the data types that are used by the web service 106. To help in providing maximum platform neutrality, WSDL uses XML Schema syntax to define data types. The <binding> element defines the message format and communication protocol details for each operation, such that the message format and communication protocol is such as expected by the web service 106.

The request-response operation type is the most common operation type, but WSDL defines four operation types, such as but not limited to: One-way where the operation can receive a message but will not return a response; Request-response where the operation can receive a request and will return a response; Solicit-response where the operation can send a request and will wait for a response; and Notification where the operation can send a message but will not wait for a response.

WSDL bindings defines the message format and protocol details for the web service 106. The binding element has two attributes - the name attribute and the type attribute. The name attribute (you can use any name you want) defines the name of the binding, and the type attribute points to the port for the binding, in this case the "glossaryTerms" port. The soap:binding element has two attributes - the style attribute and the transport attribute. The style attribute can be "rpc" or "document". In this case we use document. The transport attribute defines the SOAP protocol to use. In this case we use HTTP. The operation element defines each operation that the port exposes. For each operation the corresponding SOAP action has to be defined. You must also specify how the input and output are encoded. In this case we use "literal". It is understood that protocols other than SOAP can be used, if desired.

### WSDL Example

The following is a simplified fraction of an example WSDL document. 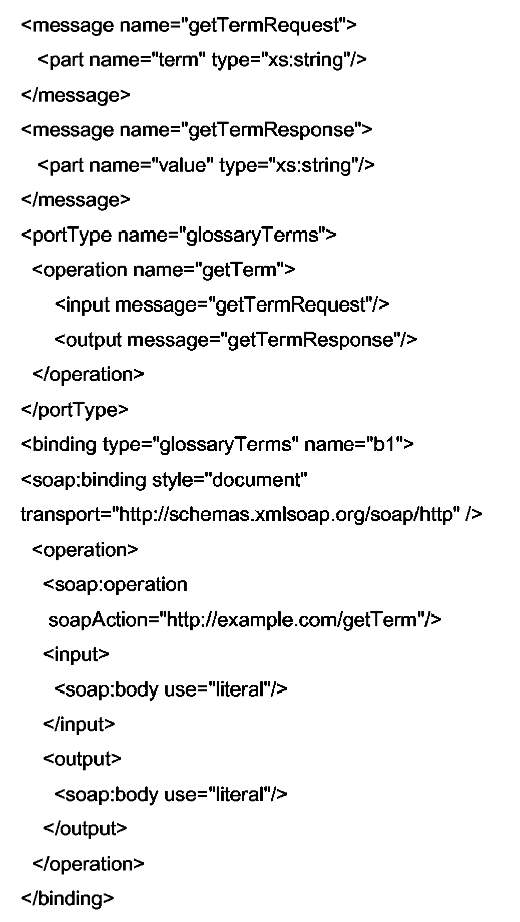 In the above example the portType element defines "glossaryTerms" as the name of the port, and "getTerm" as the name of the corresponding operation. The "getTerm" operation has an input message called "getTermRequest" and an output message called "getTermResponse". The message elements defines the parts of each message and the associated data types. Compared to traditional programming, glossaryTerms can be a function library, "getTerm" can be a function with "getTermRequest" as the input parameter and getTermResponse as the return parameter.

### Notification Framework 500

Referring to Figure 3, a notification framework 500 is shown for exposing synchronous web services 106 as asynchronous notification web services via asynchronous request 330 and response 331 messaging (as experienced by the device 100). The framework 500 provides a system and process of exposing synchronous web services 106 as asynchronous notification web services over the network 10. The model is presented by which a reusable, standard framework 500 may be implemented in front of a regular web service 106. This framework 500 encapsulates subscription messages 330 and generates notification messages 331 based on a configurable polling of the target web service 106 according to configuration parameters 420,422,424,426 in order to help configure the generic front end framework 500 for selected regular web service(s) 106.

To provide the capability of interacting with synchronous web services 106 using the asynchronous messaging 331,330 scheme, the notification framework 500 operates by disconnecting synchronous request/response messaging 332 with the web service 106 (through the message brokering of the notification framework 500) from the executing application 302 on the device 100. The notification framework 500 acts as a proxy to the Originator device asynchronous messaging 330, 331. The notification framework 500 interacts with the Originator device 100 using asynchronous messages 330,331, while the notification framework 500 interacts with the web service 106 in the synchronous 332 fashion. In this way, the application 302 on the device 100 may interact asynchronously with the notification framework 500; the notification framework 500 in turn provides the synchronous messaging 332 with the web service 106 and delivers the asynchronous response message 331 to the device 100 when available.

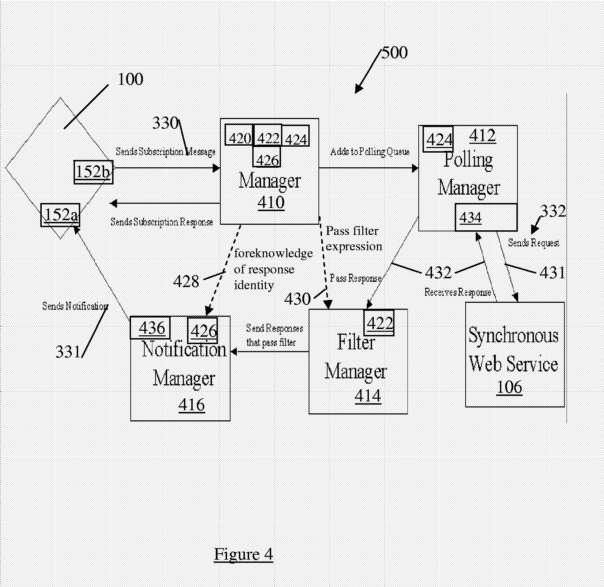

The correlation of the asynchronous request 330 and response messages 331 of the device 100 that model the data exchanged in the single synchronous messaging 332 is provided though using a correlation ID 333 associated in the messages 330,331. It is recognized that the ID 333 may be physically the same or different in the messages 330,331, however the device 100 (and associated application 302) would have the ability to correlate differing IDs 333 to one another, as needed. Further, it is recognized that the framework 500 (and associated modules - see Figure 4) can be resident on the device 100, a third party server (not shown), the web service 106, or a combination thereof. Further, it is recognized that the correlated message 331 contains sufficient information to be used by the originating device 100, of the asynchronous request message 330, for processing the request-response related logic at the application level of the application 302 executing on the device 100.

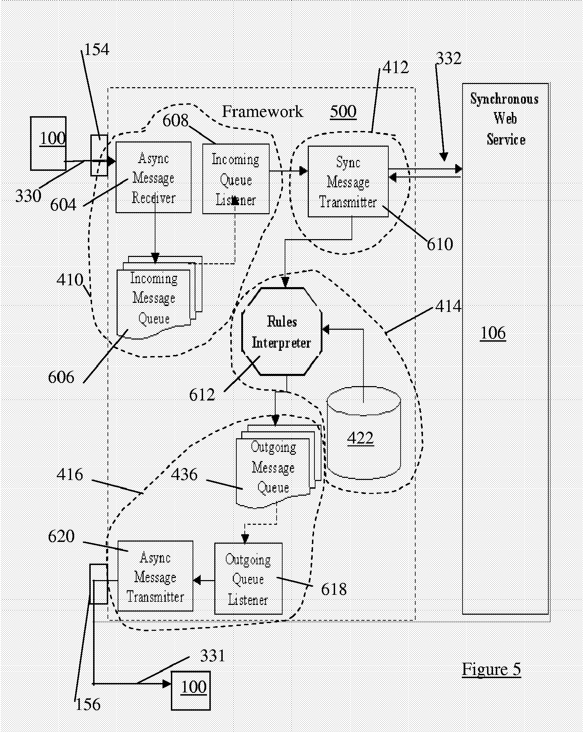

Accordingly, it is noted that the framework 500 has a first communication port 154 (see Figure 5) adapted for receiving the subscription message 330 intended for receipt by the selected service 106. The subscription message 330 includes the correlation ID 33 for identifying the network address of the device 100 intended to receive the response notification message 331, as well as any configuration parameters 420,422,424,426 for configuring the framework 500 to access and communicate with the selected web service 106 appropriate for satisfying the subscription message 330. The framework 500 also has a second communication port 156 (see Figure 5) for coupling the framework 500 with the device 100 via the communication network 104. The second communication port 156 is for enabling transmission of the asynchronous communication 331 to the device 100.

### Synchronous and Asynchronous Messaging

### Synchronous 332

In the synchronous scenario, the framework 500 initiates the synchronous request communication 431 (see Figure 4) with the web service 106 and expects to receive the appropriate response 432 as a synchronous response communication on the same connection. The delivery of synchronous content to the framework 500 is when the content is requested or "pulled" from the web service. In other words, the content is constantly accessible by the framework 500, but the framework 500 needs to issue the retrieval request 431 to ultimately access the information. In general, synchronous Web services 106 can be defined as services that are invoked over existing Web protocols by a client that blocks/waits for a response. In program-to-program communication, synchronous communications 332 require that each end (i.e. the framework 500 and the service 106) of an exchange of communication 431,432 respond in turn without initiating a new connection. A typical activity that might use a synchronous protocol would be a transmission of files from one point to another. As each synchronous request communication 431 is received, the synchronous response communication 431 is returned indicating success or failure, or the need to resend regarding the previous synchronous request communication 431. Each successive transmission of data on the same synchronous connection requires the response communication 432 to the previous request communication 431 before a new request communication 431 can be initiated between the framework 500 and the service 106. Therefore, the synchronous communications 332 consist of round-trip communications 431,432 in which the sender (for example the framework 500 or the service 106) waits for a reply. It is recognised that the synchronous communications 332 could be other than shown in Figure 4, in which the service 106 initiates the synchronous request communication 431 with the framework 500 and expects to receive the corresponding synchronous response communication 432 from the framework 500.

For example, synchronous Web services 106 can be better served by RPC-oriented messaging. When two computers (e.g. the framework 500 and the service 106) talk to each other, the exchange is often the synchronous 332 form of communication known as a remote procedure call, or RPC. With an RPC, one computer, framework 500, actually executes a program on the other computer, web service 106, as if it were a local application. Examples of synchronous communications 332 are submitting a Web page form and waiting for a confirmation page, as well as typical transactions -- say, transferring money from checking to savings. These example transactions must take place very quickly and reliably, because the various systems involved must wait to make sure the transaction was successful before they go about their business. Accordingly, it is recognized that the synchronous communications 332 involve communications 431,432 transmitted and received over the same connection/channel established between the framework 500 and the web service 106.

### Asynchronous 330,331

Referring again to Figure 4, synchronous program communication 332 is contrasted with asynchronous program communication 330,331. Asynchronous messaging can be defined as messaging that is invoked over existing Web protocols by a client (i.e. the device 100) that does not wait for a response on the same connection/channel, but does expect a response at a later time on a different connection/channel. Therefore, in contrast with the synchronous communications 332, the sender (e.g. device 100) can submit the initial request 330, and then go about its work. If the reply 331 does come, then the original sender can pick it up when it wants. E-mail is one example where asynchronous communication (either actual or simulated in the case of the framework 500) between the device 100 and the web service 106 is desired. A further example of asynchronous communication 330,331 is the performing of long-running transactions where the transaction might have multiple steps, for example, company A submitting a purchase order to company B, who fulfills the order and then submits the invoice to company A, who pays it. Such a transaction might take weeks, and thus must be handled asynchronously.

In the asynchronous scenario, the client device 100 initiates the request subscription message 330 with the framework 500 on a connection, and expects to receive the appropriate response as the asynchronous response notification message 331 on a different connection. Referring again to Figure 4, the framework 500 uses a subscription manager 410, where given the specific initial request subscription 330, for notifying the device 100 with specific data on predefined conditions 422 through the asynchronous notification message 331. In asynchronous communications 330,331, the push notification message 331 is used to send the appropriate data to the user's device 100 as soon as the data is available and/or predefined response conditions 422 of a filter manager 414 have been met to trigger the data transmission as the push notification message 331 from a notification manager 416. For example, the notification message 331 may be a compilation of numerous data instances sent by the service 106 to the framework 500 as multiple notification messages 432 in response to the original subscription message 330 and/or internal service 106 message generation (i.e. not specifically related to any external subscription messages 330). The communication protocol and device 100 addressing are device-specific and the framework 500 must be aware of them, for example via the correlation ID 333 of the request subscription 330. It is recognized that the request subscription 330 could be an internal command generated by the service 106 using known addressing information of the device 100 (addressable devices 100) or being an external command generated by an external entity (to the web service 106, device 100 and the framework 500 - not shown). The notification message 331 can be a Boolean value which informs the client device 100 that the detailed response notification message 331 is available for retrieval from the web service 106. Alternatively, the notification message 331 can return the updated data in the response to the request subscription message 330 of the client device 100, initially sent to the service 106, or as a result of internal service 106 commands or third party requests. It is noted that the framework 500 can receive multiple data updates in the form of corresponding response messages 431 from a variety of sources (for example multiple services 106) through a single or multiple polling managers 412, and therefore as a client to the device 100 forwards these updates as the notification messages 331.

### Client Environment of Device 100

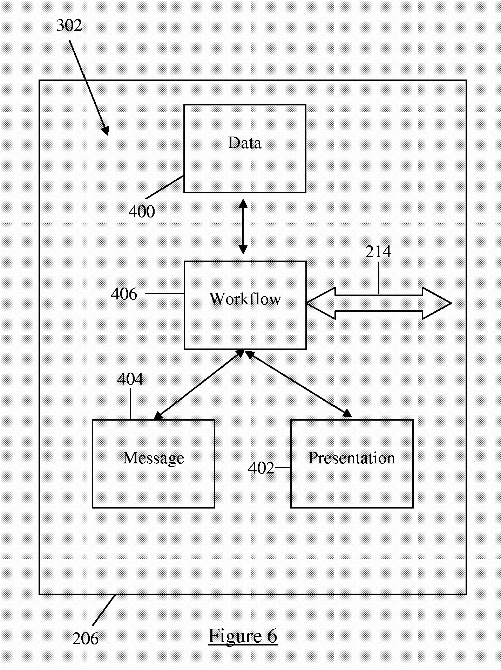

Referring to Figure 2, the applications 302 are software applications which can be written, for example, in eXtensible Markup Language (XML) and a subset of ECMAScript. An example application 302 is described in detail, for completeness purposes, with reference to Figure 6 in the Application Program 302 section found at the end of this Description Section. XML and ECMAScript are standards-based languages which allow software developers to develop the applications 302 in a portable and platform-independent way. The applications 302 can be transmitted over-the-air via the network 104 and loaded into a memory module 210 of a device infrastructure 204. Alternatively, the applications 302 may be loaded via a serial connection, a USB connection, or a short-range wireless communication system such as IR, 802. 11 (x) and/or BluetoothTM onto the device 100. Once loaded onto the device 100, the applications 302 are executed by a framework 206 (e.g. runtime environment) on the device 100, which can convert applications 302 into native code which then is executed by a processor 208 in the device infrastructure 204. Alternatively, the applications 302 may be executed as native code or interpreted by another software module or operating system on the device 100, which provides the native runtime environment 206.

The runtime environment 206 of the devices 100 can support the following basic functions for the resident executable versions of the client application programs 302, such as but not limited to:
provide a communications capability to send the messages 105 to the Web Services 106 connected via the network 104;
provide data input capabilities by the user on the input interface 202 (see Figure 2) of the devices 100 to supply data parts for Web Services' outgoing messages 105 (messages to the service 106);
provide data presentation or output capabilities for Web Services' response messages 105 (incoming messages) or uncorrelated notifications of the web service 106 on the output interface 202;

provide data storage services to maintain local client data in the memory module 210 (see Figure 2) of the device 100; and provide an execution environment for a scripting language for coordinating operation of the application components 400, 402, 404, 406 (see Figure 10) of the client application programs 302.

Therefore, the native client terminal runtime environment 206 provides an interface for the client application programs 302 and to the device 100 functionality of the processor 208 and associated operating system of a device infrastructure 204. The runtime environment 206 preferably supplies a controlled, secure and stable environment on the device 100, in which the component application programs 302 execute. The runtime environment 206 provisions the definitions of the components 400, 402, 404, 406 to create the actual web client. It is recognized that the application 302 could also be a compiled program for execution on the device infrastructure 206, rather than being a component based application 302.

Referring to Figures 1 and 2, the devices 100 are devices such as but not limited to mobile telephones, PDAs, two-way pagers and dual-mode communication. The devices 100 include a network connection interface such as a wireless transceiver 200 coupled via connection 218 to the device infrastructure 204. The wireless transceiver 200 is connectable during operation of the devices 100 to the network 104, such as to the wireless network 102 by RF links, which enable the devices 100 to communicate with each other and with external systems (such as the web service 106) via the network 102, 104. The transceiver/receiver 200 also helps the device 100 to coordinate the requests/response messages 105 between the client application programs 302 and the web service 106. The network 104 supports the transmission of data in the requests/response messages 105 between devices 100 and external systems, which are connected to the network 104. The network 104 may also support voice communication for telephone calls between the communication devices 100 and devices which are external to the network 104. A wireless data transmission protocol can be used by the wireless network 102, such as but not limited to DataTAC, GPRS or CDMA. The connection between the wireless network 102 and the Internet 104 includes an Internet Gateway (not shown), which can provide for the messages 105 and associated data content to flow between the connected devices 100 and the web service 106.

Referring again to Figure 2, the devices 100 also have the user interface 202, coupled to the device infrastructure 204 by connection 222, to interact with a user (not shown). The user interface 202 can include one or more user input interface such as but not limited to a QWERTY keyboard, a keypad, a trackwheel, a stylus, a mouse, a microphone, and the user output interface such as an LCD screen display and/or a speaker. If the screen is touch sensitive, then the display can also be used as the user input device as controlled by the device infrastructure 204. The user interface 202 is employed by the user of the device 100 to coordinate the requests/response message messages 105 over the system 10 (see Figure 1) as employed by client application programs 302 executed in the runtime environment 206.

Referring again to Figure 2, operation of the communication device 100 is enabled by the device infrastructure 204. The device infrastructure 204 includes the computer processor 208 and the associated memory module 210. The computer processor 208 manipulates the operation of the network interface 200, the user interface 202 and the runtime environment 206 of the communication device 100 by executing related instructions, which are provided by an operating system and client application programs 302 located in the memory module 210. Further, it is recognized that the device infrastructure 204 can include a computer readable storage medium 212 coupled to the processor 208 for providing instructions to the processor and/or to load/update client application programs 302 in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Architecture of the Notification Framework 500

The framework 500 for exposing synchronous web services 106 as asynchronous notification web services has a number of modules, such as but not limited to: the Subscription Manager 410; the Polling Manager 412; the Filter Manager 414; and the Notification Manager 416. The Polling Manager 412 provides for synchronous messages 332 (i.e. request/response and/or pull) communication between the framework 500 and the web service 106, and the Subscription Manager 410 and Notification Manager 416 provide for asynchronous messages 330,331 respectively between the device 100 and the framework 500, as further defined below. The devices 100 have a receiver 152a (of the interface 200) for receiving messages 331 from the network 104 and a transmitter 152b for sending messages 330 to the network 104 for eventual delivery to such as but not limited to the web service 106 by the framework 500. The subscription manager 410 can direct the polling manager 412 to poll the service 106 and other services (not shown) via a polling protocol (including polling frequency 422) to gather data required to formulate the asynchronous response notification message 331, sent by the notification manager 416 once cleared by the filter manager 414. The framework 500 in general can act as a client to the original Web Service 106 and also as a client for the device 100.

### Subscription Manager 410

This module 410 is configurable to accept incoming subscriptions 330 from devices 100 and is configured to process the subscription according to the following parameters, such as but not limited to:
a Web service network location 420 - e.g. a URL to the synchronous web service 106 that the framework 500 exposes to the device 100 as the notification based web service;
a Notification Filter 422 - an expression that determines via transmission rules when the notification message 331 should be sent to the device 100;
Polling time 424 - the time between synchronous requests 332 to the synchronous web service 106 by the polling manager 412; and
Request Data content/message definition 426 - an expression of any data and corresponding message that needs to be sent to the synchronous web service 106 during polling by the polling manager 412.

It is recognised that the notification manager 416 can optionally be informed (by communication 428 shown in ghosted view) by the subscription manager 410 of the correlation ID 333 of the potential response 331 to be sent by the notification manager 416 to the device 100 (including the network address of the device 100). The subscription manager 410 can also optionally send (by communication 430 shown in ghosted view) or otherwise share knowledge of the filter 422 to the filter manager 414, such that the filter 414 is used to process the sent response 432 from the polling manager 412 (as received from the synchronous web service 106). The subscription manager 410 also passes on the data of the subscription message 330 to the Polling Manager 412 for subsequent processing by the web service 106. The subscription manager 410 also records where the notifications should be sent (i.e. the network address of the originating device 100) and when the subscription message 330 will expire if unanswered by the web service 106 and/or polling manager 412. It is recognised that the subscription manager 410 can make the subscription expiry information available to the manager 414 by the communication 430 and available to the manager 416 by the communication 428. It is recognised that the response message 331 can contain the appropriate response to the original request message 330, including such as but not limited; to an error message, or the expected response (including data where appropriate) to the original subscription message 330. Accordingly, it is recognised that the framework configuration parameters 420,422,424,426 can be received via content of the subscription message 330 and/or pre-programmed in the framework 500 in view of know communication protocols/formats of the selected web services 106.

For example, the framework 500 can be configured to coordinate communication messages 330,331 with a selected pizza web service 106 and it's client devices 100 by having an administrator (not shown) program the network address 420 of the pizza web service 106 into the polling manager 412, program the appropriate notification filter 422 (e.g. do not send notification message 331 of confirmed delivery unless both the credit card details are authorised by the credit card company and the local pizza store confirms capacity to deliver the pizza as ordered) into the filter manager 414, program the polling protocol 424 (e.g. polling message/data format and/or frequency) into the polling manager 412, and program the request data content and message definitions 426 (message/data format expected by device 100) into the notification manager 416. It is recognised in the above example that any or all of the parameters 420,422,424,426 could be passed as values in the subscription message 330, as desired, where the remaining configuration parameters would have been pre-programmed into the framework 500 by the administrator in advance of receipt of the subscription message 330.

### Polling Manager 412

The polling manager 412 is a distinct intelligent component that periodically polls the source Web Service 106 through synchronous intermediate polling communications 332 according to specific data changes and parameters 420,422,424,426 corresponding to the initial request subscription message 330. The manager 412 is configurable either in advance of subscription message 330 receipt or in view of parameter contents of the received subscription message 330. The configuration of the manager 412 would include the communication protocol and format of data/message definitions for the messaging 332 as well as polling frequency. The manager 412 has a queue 434 of the web services 106 it will poll and runs through this queue 106 checking if a request message 431 should be sent. The Polling manager 412 can remove items from the queue 434 when their subscription has expired without being renewed. When the response 432 comes back from the web service 106, that message is passed to the Filter Manager 414 to determine readiness of transmission to the notification manager 416 and ultimately the device 100.

### Filter Manager 414

The Filter Manager 414 will receive the response message 432 from the synchronous web service 106 and will compare the results to the Notification Filter 422 that was passed in with the subscription message 330 or otherwise pre-programmed by the administrator. If the response message 432 passes the filter 422 then this data will be passed onto the Notification Manager 416 to be sent back to the user of the device 100 as the notification message 331.

### Notification Manager 416

The Notification Manager 416 will receive the response message notification 331 from the Filter Manager 414 and will send it back to the client device 100 according to the expected device address and ID 333 as well as the expected data/messaging format and protocol as defined by the parameter 426.

### Example Subscription Request

The subscription request 330 sent by the user device 100 would include, such as but not limited to:
a) a web service URL - The web service 106 to provide an asynchronous front end for Example: https://api.ebay.com/wsapi/GetItemRequest;
b) the Notification Filter 422- Determines when the notification 331should be sent to the user device 100, Example: "Price > 30 and ItemID = 3045" this would mean only send me notifications 331 when the price of the item raises above 30;
c) the polling interval (e.g. polling protocol 424) - Determines how often the web service 106 should be polled, Example: "600seconds" would mean poll every 10 minutes;
d) Polling data - The data used in the request of the synchronous web service 106, Example "itemID = 3045, color=RED"; and
e) Subscription End - The time/date for the subscription to end. This parameter is optional and will be set to some reasonable default if not supplied in the subscription request 330.

For example, we have a web service 106 that provides stock price information, and the user device would like to be notified when that stock reaches a certain price point. Instead of checking every 5 minutes himself he would use the notification framework 500. the client device 100 would provide the subscription information, such as but not limited to

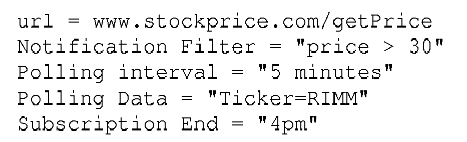

This would mean the framework 500 would check the stockprice.com/getPrice web service 106 every 5 minutes using the ticker RIMM and only send the device 100 notifications 331 when the price is greater then 30. Once 4pm rolls around the framework 500 would end the subscription and the user device could resubscribe as desired.

### Operation of the Framework 500

Accordingly, the framework 500 is responsible for: re-transmitting incoming asynchronous requests 330 to the synchronous Web Service 106 (with a potential format transformation if needed due to differing message formats between the device 100 and the web service 106); receiving the appropriate synchronous response 432 from the web service 106; and applying the filtering parameter 422 to produce the correlated asynchronous response 331 for delivery to the Originator device 100 of the asynchronous request message 330.

Referring to Figures 4 and 5, an example framework 500 is shown. The framework 500 has an Asynchronous Data Receiver 604 for receiving the message 330 from the originating device 100, e.g. the Asynchronous Message Receiver 604 receives the asynchronous message 330 from the Originator device 100. A message queue 606 is used for queuing the messages 330 from the receiver 604, for example using a first in first out (FIFO) principle. The Asynchronous Message Receiver 604 stores the received messages 330 into the Incoming Message Queue 606 and releases the Originator device 100, thus effectively decoupling the Originator device 100 from the Synchronous Web Service 106 and thereby helps to provide asynchronous communication as perceived by the device 100. An Incoming Queue Listener 608 for retrieving any newly received messages 330 from the Incoming Message Queue 606. The Incoming Queue Listener 608 is registered with Incoming Message Queue 606 as a listener of the event indicating that there is the new message 330 available in the queue 606. Upon being notified, the listener 608 retrieves the next available message 330 from the queue 606. As an example only, the receiver 604, the queue 606 and the listener 608 can be part of the subscription manager 410.

The Incoming Queue Listener 608 dispatches the retrieved message 330 to a Synchronous Message Transmitter 610, which is used for delivering synchronous request messages 431 to the Synchronous Web Service 106 and receives synchronous response messages 432 in general, including the data intended for the asynchronous response 331 for sending to the device 100. The Synchronous Message Transmitter 610 can convert (if needed) the incoming message 330 into the form that can be consumed by the Web Service 106, while preserving the contents of the initial message 330, and calls the last message 431 synchronously with the web service 106. The transmitter 610 gets the synchronous response 432 from the Synchronous Web Service 106. Accordingly, the transmitter 610 delivers the asynchronous incoming message 330 received from the Incoming Queue Listener 608, and delivers the synchronous response 432 (containing message 331content) received from the Synchronous Web Service 106 to a Rules Interpreter 612 of the filter manager 414. As an example only, the transmitter 610 is part of the polling manager 412 and the rule interpreter 612 is part of the filter manager 414.

The Rules Interpreter 612 accesses the filter parameters 422 and applies the parameters 422 in order to determine if and when the notification message should be passed to the notification manager 416. Therefore, the Rules Interpreter 612 retrieves the filter parameters 422 associated with the specific type of the asynchronous incoming message 330 and then applies the filter parameter 422 to the messages content received in the synchronous response 432 forwarded by the polling manager 412. The Rules Interpreter 612 stores the new message content 432 into an Outgoing Message Queue 436. An Outgoing Queue Listener 618 retrieves the notification message 331 ready to be sent to the Originator device 100 from the Outgoing Message Queue 436. The Outgoing Queue Listener 618 is registered with the Outgoing Message Queue 436as a listener of the event indicating that there is the new message 331 available in the queue 436. Upon being notified, the listener 618 retrieves the next available message 331. The Outgoing Queue Listener 618 dispatches the retrieved message 331 to an Asynchronous Message Transmitter 620. The asynchronous Message Transmitter 620 delivers the asynchronous messages 331 to the Originator device 100. As an example only, the Queue 436, Listener 618, and the Transmitter 620 is part of the notification manager 412.

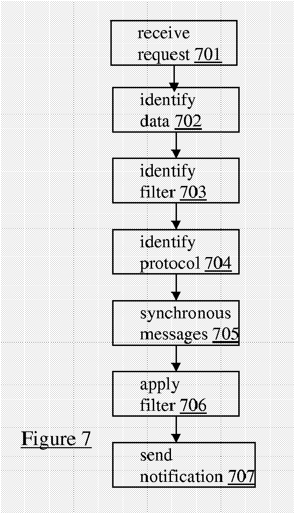

Accordingly, referring to Figures4 and 7, the process 700 for obtaining the asynchronous notification response 331 as a result of the original asynchronous subscription request directed towards the synchronous web service 106 is as follows:
step 701- receive the subscription request 330;
step 702 - identify any subscription request data 426 in the subscription request 330, the subscription request data 426 for sending in the synchronous request message 431 to the synchronous web service 106 and optionally identify a network address of the respective synchronous web service in the subscription request 431;
step 703 - identify the notification filter expression 422 in the subscription request 330, the notification filter expression 422 for determining whether the synchronous response message 432 received from the synchronous web service 106 in response to the synchronous request message 431 satisfies the subscription request data 426;
step 704 - identify a polling protocol 424 in the subscription request, the polling protocol 424 for defining communication parameters of the respective synchronous request 431 and response 432 messages;
step 705 - sending the synchronous request message 431containing the subscription request data 426 to the respective synchronous web service 106 in accordance with the polling protocol 424 and receiving the corresponding synchronous response message 432, such that the network address of the web service 106 can be obtained from the subscription request 431 and/or predefined as part of the framework 500;
step 706 - applying the identified notification filter expression 422 to the data content of the synchronous response message 432; and
step 708 - transmitting the data content of the synchronous response message 432 as the asynchronous notification response 331 to the client device 100 in response to the data content 426 satisfying the notification filter expression 422, where optionally this can include the step of waiting for additional data content from the web service 106 to satisfy the identified notification filter expression 422 before transmitting the combined data content as the asynchronous notification response 331 to the client device 100 as obtained from at least two of the synchronous response messages 431.

### Example Application Program 302

Referring to Figure 6, a block diagram of the component application program 302 comprises the data component 400, the presentation component 402 and the message component 404, which are coordinated by workflow component 406 through communications 214 with the client runtime environment 206. The structured definition language can be used to construct components 400, 402, 404 as a series of metadata records, which consist of a number of pre-defined elements representing specific attributes of a resource such that each element can have one or more values. Each metadata schema typically has defined characteristics such as but not limited to; a limited number of elements, a name of each element, and a meaning for each element. Example metadata schemas include such as but not limited to Dublin Core (DC), Anglo-American Cataloging Rules (AACR2), Government Information Locator Service (GILS), Encoded Archives Description (EAD), IMS Global Learning Consortium (IMS), and Australian Government Locator Service (AGLS). Encoding syntax allows the metadata of the components 400, 402, 404 to be processed by the device infrastructure 204 (see Figure 2), and encoding schemes include such as but not limited to XML, HTML, XHTML, XSML, RDF, Machine Readable Cataloging (MARC), and Multipurpose Internet Mail Extensions (MIME). The client runtime environment 206 can operate on the metadata descriptors of the components 400, 402, 404 to provision an executable version of the application program 302. It is recognised that the components 402 and 406 can be provided by other means for the application 302, such as but not limited to native code and other defined execution languages. The application 302 can make use of the data 400 and message 404 components to implement inter-component mappings (not shown) to help correlate asynchronous messaging 105 between the device 100 and the web service 106.

Referring again to Figure 6, the data component 400 defines data entities (definitions 314) which are used by the application program 302. Examples of data entities which the data component 400 may describe are orders, users, and financial transactions. The Data component 400 defines what information is required to describe the data entities, and in what format the information is expressed. For example, the data component 400 may define such as but not limited to an order which is comprised of a unique identifier for the order which is formatted as a number, a list of items which are formatted as strings, the time the order was created which has a date-time format, the status of the order which is formatted as a string, and a user who placed the order which is formatted according to the definitions of the data component 400.

Referring again to Figure 6, the message component 404 defines the format of messages 105 used by the application program 302 to communicate with external systems such as the web service 106. For example, one of the message definitions may describe such as but not limited to a message for placing an order which includes the unique identifier for the order, the status of the order, and notes associated with the order. It is noted that the use of components 402 and 406 may be optional for the application 302.

Referring again to Figure 6, the optional presentation component 402 defines the appearance and behavior of the application program 302 as it displayed by the user interface 202. The presentation component 402 can specify GUI screens and controls, and actions to be executed when the user interacts with the application 302 using the user interface 202. For example, the presentation definitions may define screens, labels, edit boxes, buttons and menus, and actions to be taken when the user types in an edit box or pushes a button. The majority of Web Service 106 consumers use a visual presentation of Web Service 106 operation results, and therefore provide the runtime environment 206 on their devices 100 capable of displaying user interface screens.

Referring to Figures 1 and 6, it is recognized that in the above described client application program 302 definitions hosting model, the presentation component 402 may vary depending on the client platform and environment of the device 100. For example, in some cases Web Service consumers do not require a visual presentation. The application definitions of the application program 302 can be hosted in a Web Service registry as a bundle of platform-neutral data 400, message 404, workflow 406 component descriptors with a set of platform-specific presentation component 402 descriptors for various predefined client runtimes 206 (see Figure 2). When the discovery or deployment request message 105 is issued the client type should be specified as a part of this request message 105. In order not to duplicate data, message, and workflow metadata while packaging application programs 302 for different client platforms of the communication devices 100, application definitions can be hosted on the web service 106 (for example) as a bundle of platform-neutral component definitions linked with different sets of presentation definitions. When a user makes a discovery or download request message 105, the client runtime type of the communication devices 100 is validated and the proper bundle is constructed for delivery by the web service 106 to the device 100 over the network 102, 104. For those Web Service 106 consumers, the client application programs 302 would contain the presentation component 402 linked with the data 400 and message 404 components through the workflow component 406. It is recognized that the hosting model includes message 404 and data 400 components with the remainder of the application functionality (presentation and workflow) expressed in a manner that cooperates with these defined components 400, 404, such as but not limited to native code and other defined components as desired.

Referring again to Figure 6, the optional workflow component 406 of the application program 302 defines processing that occurs when an action is to be performed, such as an action specified by a presentation component 402 as described above, or an action to be performed when messages 105 (see Figure 1) arrive from the system 10. Presentation, workflow and message processing are defined by the workflow component 406. The workflow component 406 can be written as a series of instructions in a programming language or a scripting language, such as but not limited to ECMAScript, and can be compiled into native code and executed by the runtime environment 206, as described above. An example of the workflow component 406 content may be to assign values to data, manipulate screens, or send the message 105. As with presentation component 402, multiple workflow definitions can be created to support capabilities and features that vary among devices 100. The appropriate workflow definition can be determined and sent at the time of downloading and provisioning of the application program 302.

ECMA (European Computer Manufacturers Association) Script is a standard script language, wherein scripts can be referred to as a sequence of instructions that is interpreted or carried out by another program rather than by the computer processor. Some other example of script languages are Perl, Rexx, VBScript, JavaScript, and Tcl/Tk. The scripting languages, in general, are instructional languages that are used to manipulate, customize, and automate the facilities of an existing system, such as the devices 100. In such systems, useful functionality is already available through the user interface 202 (see Figure 2), and the scripting language is a mechanism for exposing that functionality to program control. In this way, the device 100 is said to provide a host runtime environment of objects and facilities which completes the capabilities of the scripting language.

Specifically, EMCAScript is an object-oriented programming language for performing computations and manipulating computational objects within the host runtime environment. ECMAScript can be used as a Web scripting language, providing a mechanism to perform service 106 computation as part of the Web-based client-server architecture of the system 10 (see Figure 2). ECMAScript provides core scripting capabilities for a variety of host runtime environments, and therefore the core scripting language can be considered platform neutral for a number of particular host runtime environments. The runtime environment 206 (see Figure 2) can provide the ECMAScript host runtime environment for client-side computation of the communication devices 100, such as but not limited to; objects that represent windows, menus, pop-ups, dialog boxes, text areas, anchors, frames, history, cookies, and input/output. Further, the host runtime environment of the runtime environment 206 provides a means to attach scripting code to events such as but not limited to change of focus, page and image loading, unloading, error, and abort, selection, form submission, and mouse actions. In implementations using ECMA scripting, the code appears within the workflow component 406, combines user interface elements and fixed and computed text and images, and is reactive to user interaction on the user interface 202. The web service 106 (see Figure 1) provides a different host environment for server-side computation including objects representing requests, clients, and files, and mechanisms to lock and share data. By using the client side and server side scripting together, it is possible to distribute computation between the client communication devices 100 and the service 106 while providing a customized user interface 202 for the Web-based application programs 302.

ECMAScript also defines a set of built-in operators which may not be, strictly speaking, functions or methods. ECMAScript operators include such as but not limited to various unary operations, multiplicative operators, additive operators, bitwise shift operators, relational operators, equality operators, binary bitwise operators, binary logical operators, assignment operators, and the comma operator. ECMAScript syntax resembles Java syntax, however, ECMAScript syntax is relaxed to enable it to serve as an easy-to-use scripting language for developers. For example, a variable in ECMAScript is not required to have its type declared nor are types associated with properties, and defined functions are not required to have their declarations appear textually before calls to them. It is recognized that in a class-based object-oriented programming language, in general, state is carried by instances, methods are carried by classes, and inheritance is only of structure and behavior. In ECMAScript, the state and methods are carried by objects, and structure, behavior, and state are all inherited.

### Application Program 302 Example

Accordingly, referring to Figure 6, the client application programs 302 can be defined as a set of platform-neutral component definitions, namely for data 400 and message 404 components, and the optional presentation component 402 using XML (or any other suitable structured definition language). The optional workflow component 406 can be defined using ECMAScript (or any other suitable platform-neutral scripting language). The client runtime environment 206 (see Figure 2) can generate component templates based on meta-definitions when the definitions of the application program 302 are provisioned on the communication device 100. With a large variety of terminal runtime environments 206, the cross-platform standards such as XML or ECMAScript can be used to define application component metadata instead of pre-building the application programs 302. This delayed binding can allow the generic application definitions of the component application programs 302 to be run on a wide variety of terminal system environments 206, represented by various different communication devices 100.

The following example shows how a Web Services client application program 302 could be expressed using a structured definition language, such as but not limited to XML, and a platform neutral scripting/programming language, such as but not limited to ECMAScript, with defined components conforming with the following Document Type Definition (DTD):

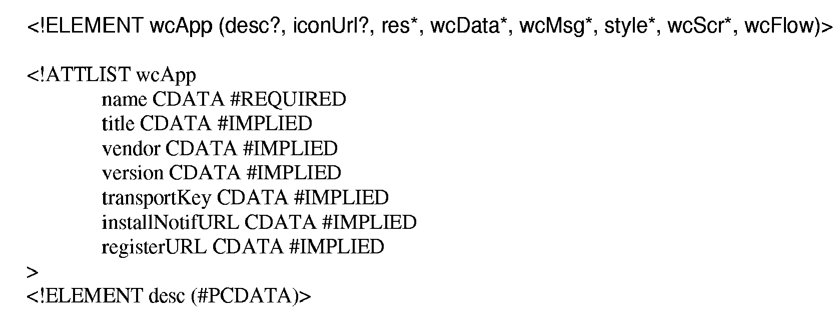

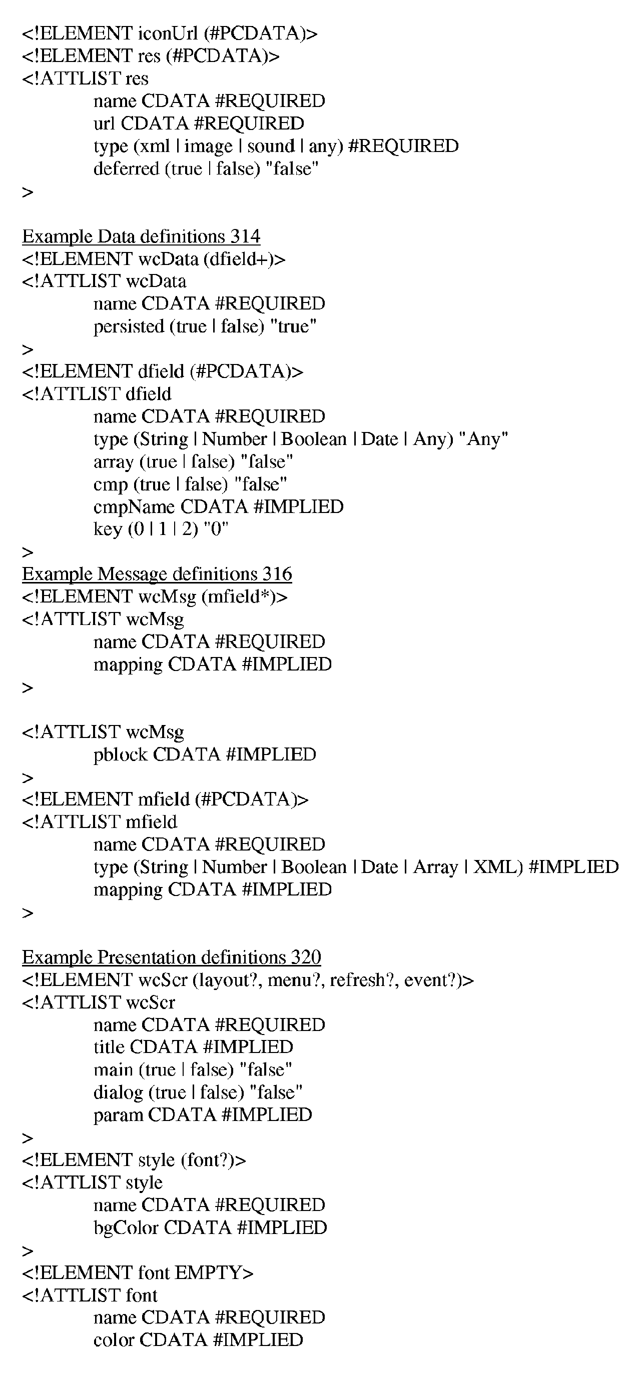

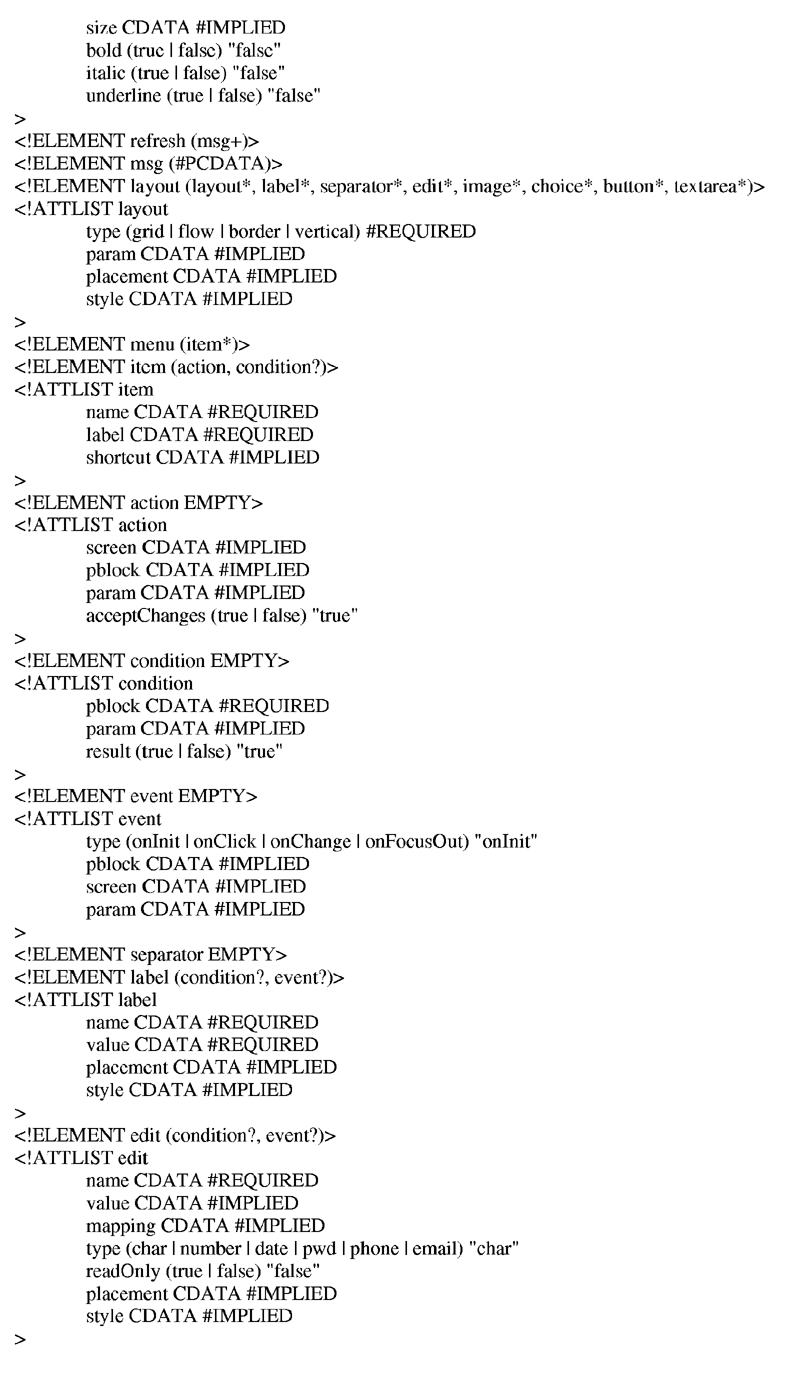

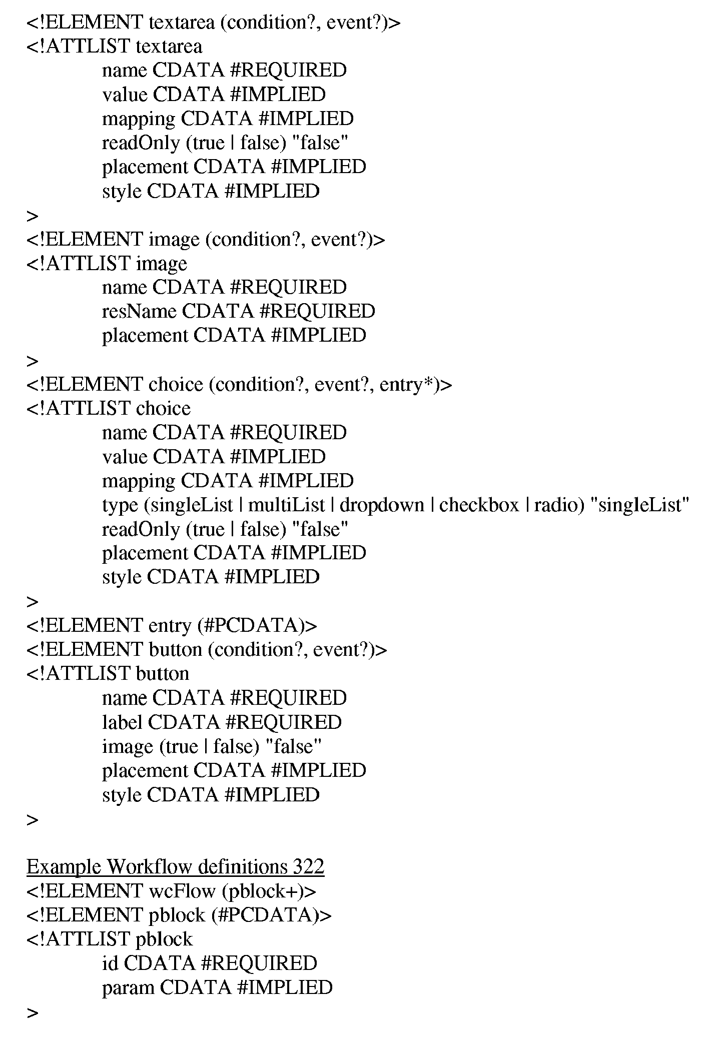

As given above, the XML elements define the example component application 302 including a wcApp element, a wcData element, a wcMsg element, a wcSrc element, and a wcFlow element. Referring to Figure 6, the wcApp element is a top-level element which defines the application program 302. The wcData element defines the example data component 400, which is comprised of a group of named, typed fields. The wcMsg element defines the example message component 404, which similarly defines a group of named, typed fields. The wcSrc element defines the example presentation component 402. The example presentation component 402 is a label, a separator, an image, a button, an edit field, a text area, a single-selection list, a multi-selection list, a drop-list, a checkbox, a radio button, or a screen containing a group of other presentation definitions.
Referring to the above example component application program 302 and Figure 6, the wcFlow element defines the example workflow component 406. The pblock attributes of the XML elements specify a pblock element nested in the wcFlow element. Each pblock element comprises script which defines part of the workflow of the application program 302. The script is written in ECMAScript. In order to define the behavior of the application 302, the optional workflow component 406 uses ECMAScript to reference and manipulate the data component 400, the presentation component 402, and the message component 404. The workflow component 406 can also reference external object types, which allow actions to be performed on the components defined in the application 302. For example, a wcMsg type allows a message defined by a message definition to be evaluated to determine whether mandatory fields have been supplied, and to be sent to an external system such as the web service 106. A wcData type allows the size of collections of data entities defined by data definition 314 to be determined, and allows data entities to be deleted. A wcScr type allows a presentation definition to be displayed to the user. Similarly, a special dialog external object allows a message to be displayed to the user on the user interface 202 (see Figure 2).

## Claims

1. A system for asynchronous processing of network communications between a client device and a respective synchronous web service, the system comprising:
an input for receiving a subscription request;
a subscription module configured for processing the received subscription request to identify subscription request data in the subscription request for sending in a synchronous request message to the synchronous web service, to identify a notification filter expression in the subscription request for determining whether a synchronous response message received from the synchronous web service in response to the synchronous request message satisfies the subscription request data, and to identify a polling protocol in the subscription request for defining communication parameters of the respective synchronous request and response messages; and
an output for sending the polling protocol and the subscription request data to be used in polling the synchronous web service.

2. The system of claim 1 further comprising a polling manager coupled to the subscription module for receiving the polling protocol and the subscription request data, and for sending the synchronous request message containing the subscription request data to the respective synchronous web service in accordance with the polling protocol and for receiving the corresponding synchronous response message.

3. The system of claim 2, wherein the polling protocol has a polling parameter comprising: a polling interval for defining a frequency of sequential synchronous request messages sent to the respective synchronous web service or a communication format for the request and response messages.

4. The system of claim 2 or claim 3 further comprising the polling manager configured for receiving a network address of the respective synchronous web service in addition to the received polling protocol and the subscription request data, the polling manager configured for network communication with a plurality synchronous web services comprising the respective web service.

5. The system of claim 4 further comprising the subscription module configured for identifying the network address in the subscription request and for sending the network address to the polling module via the output.

6. The system of any one of claims 3 to 5, wherein the polling manager is preconfigured for communicating with the respective synchronous web service using a predefined network address of the respective synchronous web service .

7. The system of any one of claims 1 to 6 further comprising a filter module coupled to the polling module for applying the notification filter expression identified by the subscription module to the data content of the synchronous response message when received.

8. The system of claim 7, wherein the filter module is coupled to the subscription module for receiving the notification filter expression.

9. The system of claim 7 or claim 8 further comprising a notification module coupled to the filter module, the notification module configured for transmitting the data content of the synchronous response message as an asynchronous notification response to the client device in response to the data content satisfying the notification filter expression.

10. The system of claim 9 further comprising the notification module configured for receiving a network address of the client device from the subscription module, the network address of the client device part of the originally received subscription request.

11. A method for asynchronous processing of network communications between a client device and a respective synchronous web service, the method comprising the steps of:
receiving a subscription request;
identifying subscription request data in the subscription request, the subscription request data for sending in a synchronous request message to the synchronous web service;
identifying a notification filter expression in the subscription request, the notification filter expression for determining whether a synchronous response message received from the synchronous web service in response to the synchronous request message satisfies the subscription request data;
identifying a polling protocol in the subscription request, the polling protocol for defining communication parameters of the respective synchronous request and response messages;
wherein the polling protocol and the subscription request data are to be used in polling the synchronous web service.

12. The method of claim 11 further comprising the step of sending the synchronous request message containing the subscription request data to the respective synchronous web service in accordance with the polling protocol and receiving the corresponding synchronous response message.

13. The method of claim 12, wherein the polling protocol has a polling parameter comprising: a polling interval for defining a frequency of sequential synchronous request messages sent to the respective synchronous web service or a communication format for the request and response messages.

14. The method of claim 12 or claim 13 further comprising the step of identifying a network address of the respective synchronous web service in the subscription request.

15. The method of claim 14, wherein the network address is one of a plurality of potential network addresses of corresponding ones of the synchronous web service.

16. The method of any one of claims 13 to 15, wherein a polling manager for communicating the synchronous request and response messages is preconfigured for communicating with the respective synchronous web service using a corresponding predefined network address of the respective synchronous web service.

17. The method of any one of claims 11 to 16 further comprising the step of applying the identified notification filter expression to the data content of the synchronous response message.

18. The method of claim 17 further comprising the step of waiting for additional data content to satisfy the identified notification filter expression before transmitting the combined data content as an asynchronous notification response to the client device from at least two of the synchronous response messages.

19. The method of claim 17 or claim 18 further comprising the step of transmitting the data content of the synchronous response message as an asynchronous notification response to the client device in response to the data content satisfying the notification filter expression.

20. The method of claim 19 further comprising the step of identifying a network address of the client device in the received subscription request, the network address of the client device for directing the asynchronous notification response to the client device over the network.

21. A computer program product for asynchronous processing of network communications between a client device and a respective synchronous web service, the computer program product comprising a computer readable medium embodying program code means executable by a processor of a computer device, system or apparatus for implementing the method of any one of claims 11 to 20.

22. A communications system comprising the system of any one of claims 1 to 10.
